# EUROPÄISCHE PATENTSCHRIFT

(11) **EP 1 142 662 B1**
(45) Veröffentlichungstag und Bekanntmachung des Hinweises auf die Patenterteilung: **04.08.2004**
(21) Anmeldenummer: 01105244.6
(22) Anmeldetag: 05.03.2001
(51) Int. Cl.: B23D 35/00

(54) **Vorrichtung zum Vorbau und zum Wechseln eines Werkzeugsatzes**
Installation for assembling and changing tools
Appareil pour assembler et changer des outils

(30) Priorität: 05.04.2000 DE 10016795
(43) Veröffentlichungstag der Anmeldung: 10.10.2001
(73) Patentinhaber: NLT Norder Lagertechnik GmbH & Co. Maschinenbau KG, 26506 Norden (DE)
(72) Erfinder: Cai, Yiying, Dr., 26506 Norden (DE); Glave, Volker, 26524 Berumbur (DE)
(74) Vertreter: Siekmann, Gunnar, Dipl.-Phys.

(56) Entgegenhaltungen:
- WO-A-96/09145

## Beschreibung

Die Erfindung betrifft eine Vorrichtung zum Vorbau und zum Wechseln eines Werkzeugsatzes für eine Längsteilanlage mit einem Lager zur senkrechten Lagerung von Werkzeugen und einer in dem Lager bewegbaren Aufnahmeeinrichtung zur Aufnahme und zum Transport der Werkzeuge.

Derartige Längsteilanlagen, insbesondere Spaltanlagen, werden benötigt um Bandstahl oder andere Materialien in der Längsrichtung auf definierte Streifenbreiten zu zerteilen. Dazu wird eine Rolle Bandstahl abgewickelt, zerteilt und wieder aufgewickelt. Das Zerteilen erfolgt auf einer sogenannten Spaltschere, bei der auf zwei gegenläufig zueinander laufenden Wellen Distanzstücke und Messer angeordnet sind. Die Anordnung der Distanzstücke und Messer muß für jeden neuen Zerteilauftrag geändert werden. Typischerweise werden für einen Schneid- oder Zerteilvorgang 66 bis 100 Werkzeuge benötigt, die ein Gesamtgewicht von etwa 400 bis 800 kg aufweisen. Bisher erfolgt die Bestückung der Wellen mit Distanzstücken und Messern überwiegend manuell.

Eine Vorrichtung der eingangs genannten Art ist aus der EP 0 911 104 A1 bekannt. In dieser Vorrichtung sind an zwei gegenüberliegenden Wänden Werkzeuge auf Dornen gelagert, die von einer Aufnahmeeinrichtung abgenommen werden. Dabei ist die Aufnahmeeinrichtung portalartig ausgebildet, wobei im Deckenbereich ein in zwei Dimensionen verfahrbares Gerüst aufgebaut ist, das ein absenkbares Element aufweist, welches zu den an den Wänden hängenden Werkzeugen geführt wird und dort die Werkzeuge aufnimmt.

Der Erfindung liegt die Aufgabe zugrunde, eine Vorrichtung der eingangs genannten Art zu schaffen, die einen besonders schnellen und präzisen Werkzeugwechsel ermöglicht.

Die Lösung dieser Aufgabe erfolgt mit einer Vorrichtung mit den Merkmalen des Patentanspruchs 1. Vorteilhafte Weiterbildungen der Erfindung sind in den Unteransprüchen beschrieben.

Nach dem Grundgedanken der Erfindung ist die in dem Lager der Vorrichtung bewegbare Aufnahmeeinrichtung zur Aufnahme und zum Transport der Werkzeuge oben und unten geführt. Die Aufnahmeeinrichtung weist also zwei Führungen auf, die oben und unten, d. h. oberhalb und unterhalb eines in der Aufnahmeeinrichtung vorgesehenen Greifers vorgesehen sind, so daß der tatsächliche Übergabepunkt, an dem die Werkzeuge von der Aufnahmeeinrichtung aufgenommen werden, oben und unten von Führungen umgeben ist. Im Gegensatz zu den bekannten hängenden Aufnahmeeinrichtungen wird dadurch erreicht, daß die Aufnahmeeinrichtung frei von Schwingungen ist und daher besonders schnell und präzise hin und her bewegt werden kann, so daß die Arbeitsgeschwindigkeit insgesamt erhöht wird und der Werkzeugwechsel besonders schnell durchgeführt werden kann.

Besonders bevorzugt ist die Aufnahmeeinrichtung oben und unten synchron angetrieben, so daß die Aufnahmeeinrichtung insgesamt gleichmäßig angetrieben ist und durch den synchronen Antrieb sicher hin- und herbewegt werden kann, wobei ein Verkanten der Aufnahmeeinrichtung zuverlässig ausgeschlossen ist. Weiterhin weist die Aufnahmevorrichtung bevorzugt einen vertikal verfahrbaren Greifer auf. Günstigerweise sind dazu vier senkrechte Stäbe vorgesehen, die einen Rahmen bilden, in dem der Greifer vertikal verfahrbar ist. Günstigerweise ist die Aufnahmeeinrichtung, insbesondere der Rahmen, um die vertikale Achse drehbar, so daß der Greifer in zwei Dimensionen verfahrbar und um seine Achse drehbar ist. In einer bevorzugten Ausbildungsform der Erfindung sind am Boden und am Dach der Vorrichtung je eine Schiene angeordnet, auf der die Aufnahmeeinrichtung verfahrbar ist. Die Schiene ist günstigerweise mittig zwischen den zu den Schienen parallelen Außenwänden des Lagers angeordnet. An diesen Außenwänden sind Kragarme oder Lagerdorne angeordnet, an denen die Werkzeuge senkrecht gelagert, insbesondere aufgehängt sind. Der Greifer kann also zwischen den beiden Wänden des Lagers, an denen die Kragarme angeordnet sind, hin und her gefahren und auf und ab bewegt werden. Durch die Drehmöglichkeit der Aufnahmeeinrichtung kann der Greifer auf beide Seiten des Lagers zugreifen. Die erfindungsgemäße Ausführungsform ermöglicht ein besonders schnelles Verfahren der Aufnahmeeinrichtung, das zudem, insbesondere durch den synchronen Antrieb oben und unten, besonders präzise durchgeführt werden kann.

In einer besonders bevorzugten Ausführungsform weist der in der Aufnahmeeinrichtung vorgesehene Greifer mindestens eine horizontal verfahrbare Stützwelle auf. Diese Stützwelle ist dazu ausgelegt, den verbleibenden Zwischenraum zwischen dem Greifer und dem angesteuerten Kragarm an einer der Außenwände des Lagers zu überbrücken, so daß es möglich ist, die auf dem Kragarm gelagerten Werkzeuge über die Stützwelle auf den Greifer zu ziehen. Erfindungsgemäß ist mindestens eine Stützwelle vorgesehen. Besonders bevorzugt sind jedoch zwei horizontal verfahrbare Stützwellen vorgesehen, die beide in den aufzunehmenden Werkzeugring einfahren und so eine definierte Lagerung des Werkzeugs gewährleisten und ein Schwingen oder Pendeln des Werkzeugs verhindern. Der Greifer ist bevorzugt als ausfahrbarer Innengreifer mit spreizbaren, insbesondere drei spreizbaren Fingern ausgebildet. Der Greifer kann nahezu beliebig weit ausgefahren werden und klemmt den letzten einzuziehenden Ring bzw. das letzte einzuziehende Werkzeug von innen fest und zieht dann das Werkzeug und alle vor ihm liegenden Werkzeuge über die Stützwellen auf den Greifer. Die spreizbaren Finger sind günstigerweise in gleichen Abständen zueinander an dem Greifer angeordnet, wobei bei drei spreizbaren Fingern ein Finger nach unten ausgerichtet ist, so daß zwei spreizbare Finger in symmetrischer Weise vom höchsten Punkt entfernt angeordnet sind. Die verfahrbaren Stützwellen sind dicht benachbart zu den oberen Fingern angeordnet, günstigerweise an der innen ausgerichteten Seite, so daß das ringartige Werkzeug auf diesen Stützwellen leicht zum Liegen kommt.

Weiterhin weist der Greifer der Vorrichtung bevorzugt einen Pusher und einer Werkzeugpuffer auf. Der Werkzeugpuffer wird als ein Dorn gebildet, auf dem die vom Greifer erfaßten ringartigen Werkzeuge abgelegt werden. Der Pusher kann das oder die auf dem Werkzeugpuffer hängenden Werkzeuge nach vorne schieben und ist dafür als flächiges Schiebeelement ausgebildet. Die Stützwellen und der Werkzeugpuffer sind günstigerweise so angeordnet, daß die Auflageflächen des Werkzeugpuffers und der Stützwellen auf dem gleichen Kreisumfang liegen. Dadurch ist eine zuverlässige Übergabe der Werkzeuge vom Kragarm auf die Stützwellen und insbesondere von den Stützwellen auf den Werkzeugpuffer gewährleistet.

Nachfolgend wird die Erfindung anhand eines in der Zeichnung dargestellten Ausführungsbeispiels weiter erläutert. Im einzelnen zeigen die schematischen Darstellungen in:
- Fig. 1: eine perspektivische Ansicht einer erfindungsgemäßen Vorrichtung und
- Fig. 2: eine perspektivische Ansicht eines Greifers der erfindungsgemäßen Vorrichtung.

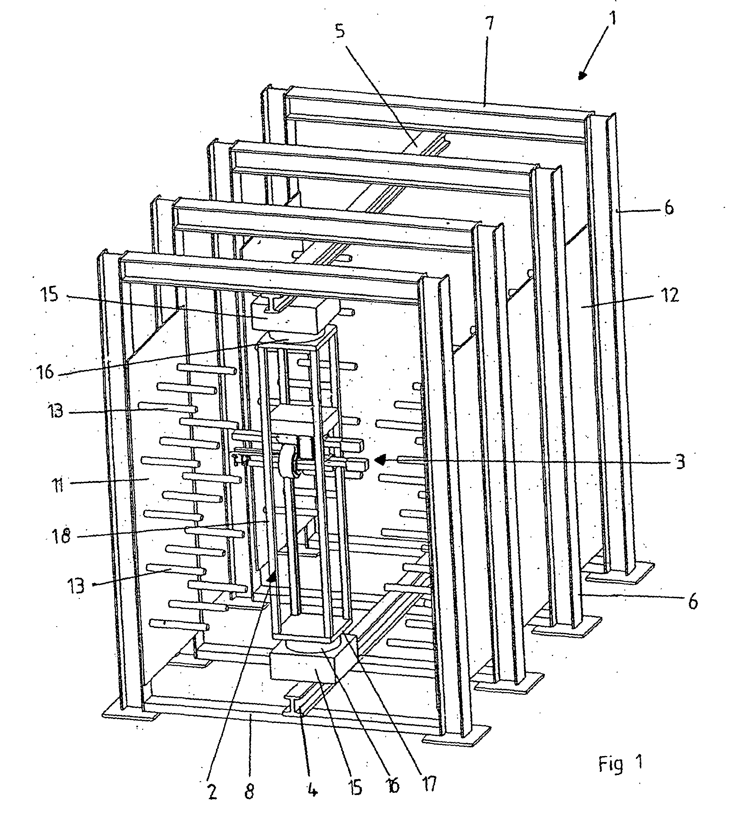

In Fig. 1 ist eine erfindungsgemäße Vorrichtung 1 dargestellt, die im wesentlichen ein Lager und eine in diesem Lager bewegbare Aufnahmeeinrichtung 2 aufweist. Das Lager weist eine Mehrzahl von in zwei Reihen angeordneten senkrechten Trägern 6 auf, die in ihrem oberen Endbereich mit Querträgern 7 verbunden sind, die eine Art Dach bilden. Im unteren Endbereich sind Bodenträger 8 vorgesehen, die die senkrechten Träger 6 miteinander verbinden, um so die Stabilität des Lagers zu erhöhen. An den senkrechten Trägern 6 sind auf der Innenseite Wandelemente angeordnet, die nach innen ragende Kragarme 13 aufweisen, die auch als Lagerdorne bezeichnet werden können. Die Wandelemente bilden zwei sich gegenüberliegende Wände 11 und 12. Auf diesen Kragarmen 13 können ringartige Werkzeuge in hängender Weise angeordnet werden, die dann von der Aufnahmeeinrichtung 2 zu einem Werkzeugsatz zusammenstellbar sind. Mittig zwischen den beiden Wänden 11 und 12 des Lagers ist an den oberen Querträgern 7 eine Schiene 5 und auf den unteren Bodenträgern 8 eine Schiene 4 angeordnet. An diesen Schienen 4, 5 ist die Aufnahmeeinrichtung 2 geführt. Dazu ist jeweils ein unterer und ein oberer Antrieb 15 vorgesehen, so daß die Aufnahmeeinrichtung 2 oben und unten synchron angetrieben ist. Oberhalb des unteren Antriebs 15 ist ein Drehgelenk 16 angeordnet, ebenso wie ein Drehgelenk 16 unterhalb des oberen Antriebs 15 angeordnet ist. Um diese Drehgelenke ist die gesamte übrige Aufnahmeeinrichtung drehbar. An den Drehgelenken 16 sind plattenförmige Elemente 17 angeordnet, die in jedem Eckbereich ein Rahmenelement 18 aufweisen, so daß insgesamt ein von vier senkrechten Stangen gebildeter Rahmen vorgesehen ist, in dem ein Greifer 3 vertikal auf und ab bewegbar ist und auf diese Weise zu jedem beliebigen Kragarm 13 gefahren werden kann. Durch die Verfahrbarkeit entlang der Schienen 4 und 5 und die Möglichkeit der Auf- und Abbewegung des Greifers 3 innerhalb der Aufnahmeeinrichtung 2 wird jeder beliebige Punkt des Lagers erreicht. Durch die Möglichkeit der Drehung um die Drehgelenke 16 kann der Greifer 3 entweder der einen Wand 11 oder der anderen Wand 12 des Lagers zugewandt werden.

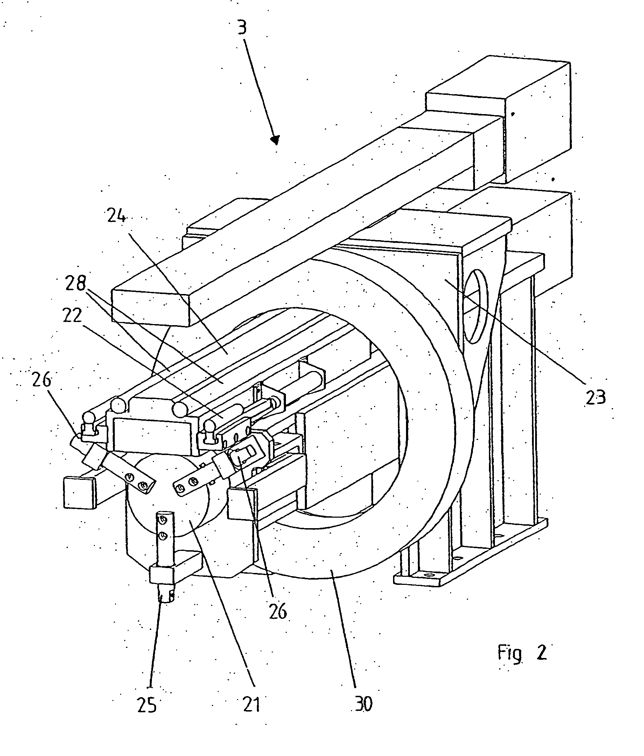

In Fig. 2 ist eine perspektivische Ansicht eines Details der Vorrichtung, nämlich des Greifers dargestellt. Der Greifer 3 weist im wesentlichen einen ausfahrbaren Innengreifer 21, einen Werkzeugpuffer 24 und einen Pusher 23 auf. Auf dem Werkzeugpuffer 24 ist ein ringförmiges Werkzeug 30 abgelegt, das im wesentlichen auf den beiden stabförmigen Auflagestäben 28 des Werkzeugpuffers 24 aufliegt, die so angeordnet sind, daß sie im Bereich des Innenumfangs des ringförmigen Werkzeugs 30 liegen. Der Innengreifer 21 weist drei spreizbare Finger 25, 26 auf, die gleichmäßig verteilt, nämlich um 120° versetzt zueinander, angeordnet sind. Dabei ist ein Finger 25 nach unten ausgerichtet, während zwei obere Finger 26 vorgesehen sind, die nah benachbart zu Stützwellen 22 angeordnet sind. Die Stützwellen 22 fahren im Betrieb aus und überbrücken den verbleibenden Abstand zwischen dem Greifer 3 und dem angesteuerten Kragarm 13.

Im Betrieb greift der ausfahrbare Innengreifer 21 mit seinen spreizbaren Fingern 25, 26 in die innere Bohrung der ringförmigen Werkzeuge 30 und schiebt das oder die Werkzeuge 30 vom Kragarm 13 auf den Werkzeugpuffer 24 oder umgekehrt. Dadurch ist es möglich, alle Werkzeuge auf einem Kragarm 13 in einem Zug auf den Werkzeugpuffer 24 zu übergeben oder umgekehrt zurückzugeben. Der Pusher 23 schiebt die Werkzeuge vom Ende des Werkzeugpuffers 24 nach vorne. Der Werkzeugpuffer 24 ist größenmäßig so ausgelegt, daß mehrere Werkzeuge 30 in einem Arbeitszyklus aufgenommen und in einem Zug entweder an ein zu bestückendes Drehkreuz oder direkt an eine zu bestückende Welle oder an eine andere vorbestimmte Zwischenlagerstation übergeben werden können. Ein Werkzeugsatz kann beispielsweise auch auf bestimmten Lagerdornen oder Kragarmen 13 des Lagers vorgebaut werden.

## Patentansprüche

1. Vorrichtung zum Vorbau und zum Wechseln eines Werkzeugsatzes für eine Längsteilanlage mit einem Lager zur senkrechten Lagerung von Werkzeugen (30) und einer in dem Lager bewegbaren Aufnahmeeinrichtung (2) zur Aufnahme und zum Transport der Werkzeuge,
**dadurch gekennzeichnet,**
**daß** die Aufnahmeeinrichtung (2) oben und unten geführt ist.

2. Vorrichtung nach Anspruch 1, **dadurch gekennzeichnet, daß** die Aufnahmeeinrichtung (2) oben und unten synchron angetrieben ist.

3. Vorrichtung nach einem der Ansprüche 1 oder 2, **dadurch gekennzeichnet, daß** die Aufnahmeeinrichtung (2) einen vertikal verfahrbaren Greifer (3) aufweist.

4. Vorrichtung nach einem der vorhergehenden Ansprüche, **dadurch gekennzeichnet, daß** die Aufnahmeeinrichtung (2) um die vertikale Achse drehbar ist.

5. Vorrichtung nach einem der vorhergehenden Ansprüche, **dadurch gekennzeichnet, daß** auf dem Boden und am Dach des Lagers je eine Schiene (4, 5) angeordnet ist, auf der die Aufnahmeeinrichtung (2) verfahrbar ist.

6. Vorrichtung nach Anspruch 5, **dadurch gekennzeichnet, daß** die Schienen (4, 5) mittig zwischen den zu den Schienen (4, 5) parallelen Wänden (11, 12) des Lagers angeordnet sind.

7. Vorrichtung nach einem der vorhergehenden Ansprüche, **dadurch gekennzeichnet, daß** der in der Aufnahmeeinrichtung (2) vorgesehene Greifer (3) mindestens eine horizontal verfahrbare Stützwelle (22) aufweist.

8. Vorrichtung nach einem der vorhergehenden Ansprüche, **dadurch gekennzeichnet, daß** der Greifer (3) zwei horizontal verfahrbare Stützwellen (22) aufweist.

9. Vorrichtung nach einem der vorhergehenden Ansprüche, **dadurch gekennzeichnet, daß** der Greifer (3) einen ausfahrbaren Innengreifer (21), mit insbesondere drei, spreizbaren Fingern (25, 26) aufweist.

10. Vorrichtung nach Anspruch 9, **dadurch gekennzeichnet, daß** die spreizbaren Finger (25, 26) in gleichen Abständen zueinander an dem Greifer angeordnet sind.

11. Vorrichtung nach einem der Ansprüche 9 oder 10, **dadurch gekennzeichnet, daß** ein Finger (25) nach unten ausgerichtet ist und daß die verfahrbaren Stützwellen (22) dicht benachbart zu den oberen Fingern (26) angeordnet sind.

12. Vorrichtung nach einem der vorhergehenden Ansprüche, **dadurch gekennzeichnet, daß** der Greifer (3) einen Pusher (23) und einen Werkzeugpuffer (24) aufweist.

13. Vorrichtung nach einem der vorhergehenden Ansprüche, **dadurch gekennzeichnet, daß** die Stützwellen (22) und der Werkzeugpuffer (23) so angeordnet sind, daß die Auflageflächen des Werkzeugspuffers (23) und der Stützwellen (22) auf dem gleichen Kreisumfang liegen.

## Claims

1. An installation for assembling and changing tools for a longitudinal parts plant with a bearing for vertical storage of tools (30) and a receiving mechanism (2) mobile in the bearing for receiving and transporting the tools,
**characterised in that**
the receiving mechanism (2) is guided at the top and bottom.

2. The installation as claimed in Claim 1, **characterised in that** the receiving mechanism (2) is driven synchronously at the top and bottom.

3. The installation as claimed in any one of Claims 1 or 2, **characterised in that** the receiving mechanism (2) has a vertically travelling gripper (3).

4. The installation as claimed in any one of the preceding claims, **characterised in that** the receiving mechanism (2) can be rotated about the vertical axis.

5. The installation as claimed in any one of the preceding claims, **characterised in that** a rail (4, 5), on which the receiving mechanism (2) can travel, is arranged on the floor and on the roof of the bearing.

6. The installation as claimed in Claim 5, **characterised in that** the rails (4, 5) are arranged in the middle between the walls (11, 12) of the bearing parallel to the rails (4, 5).

7. The installation as claimed in any one of the preceding claims, **characterised in that** the gripper (3) provided in the receiving mechanism (2) has at least one horizontal travelling support shaft (22).

8. The installation as claimed in any one of the preceding claims, **characterised in that** the gripper (3) has two horizontally travelling support shafts (22).

9. The installation as claimed in any one of the preceding claims, **characterised in that** the gripper (3) has a telescopic inner gripper (21), with in particular three, spreadable fingers (25, 26).

10. The installation as claimed in Claim 9, **characterised in that** the spreadable fingers (25, 26) are arranged at the same distance from one another on the gripper.

11. The installation as claimed in any one of Claims 9 or 10, **characterised in that** a finger (25) is directed downwards and that the travelling support shafts (22) are arranged immediately adjacent to the upper fingers (26).

12. The installation as claimed in any one of the preceding claims, **characterised in that** the gripper (3) has a pusher (23) and a tool buffer (24).

13. The installation as claimed in any one of the preceding claims, **characterised in that** the support shafts (22) and the tool buffer (23) are arranged such that the bearing surfaces of the tool buffer (23) and of the support shafts (22) are on the same circular periphery.

## Revendications

1. Appareil pour assembler et changer des outils pour une installation de sectionnement avec un palier pour le montage vertical d'outils (30) et un réceptacle (2) mobile dans le palier et devant recevoir et transporter les outils,
**caractérisé en ce que**
le réceptacle (2) est guidé au dessus et en dessous.

2. Appareil selon la revendication 1, **caractérisé en ce que** le réceptacle (2) est entraîné en synchronisme au dessus et en dessous.

3. Appareil selon l'une des revendications 1 ou 2, **caractérisé en ce que** le réceptacle (2) présente un dispositif de préhension (3) déplaçable verticalement.

4. Appareil selon l'une des revendications précédentes, **caractérisé en ce que** le réceptacle (2) peut tourner autour de l'axe vertical.

5. Appareil selon l'une des revendications précédentes, **caractérisé en ce que** sur les parties inférieure et supérieure du palier, on a disposé un rail (4, 5) sur lequel le réceptacle (2) est déplaçable.

6. Appareil selon la revendication 5, **caractérisé en ce que** les rails (4, 5) sont disposés de manière centrale entre les parois (11, 12) du palier parallèles aux rails (4, 5).

7. Appareil selon l'une des revendications précédentes, **caractérisé en ce que** le dispositif de préhension (3) prévu dans le réceptacle (2) présente au moins un arbre d'appui (22) déplaçable horizontalement.

8. Appareil selon l'une des revendications qui précèdent, **caractérisé en ce que** le dispositif de préhension (3) présente deux arbres d'appui (22) déplaçables horizontalement.

9. Appareil selon l'une des revendications précédentes, **caractérisé en ce que** le dispositif de préhension (3) présente un dispositif de préhension intérieur (21) déployable, avec en particulier trois doigts écartables (25, 26).

10. Appareil selon la revendication 9, **caractérisé en ce que** les doigts écartables (25, 26) sont disposés à intervalles réguliers sur le dispositif de préhension.

11. Appareil selon l'une des revendications 9 ou 10, **caractérisé en ce qu'**un doigt (25) est orienté vers le bas et que les arbres d'appui (22) déplaçables sont disposés à proximité étroite des doigts supérieurs (26).

12. Appareil selon l'une des revendications précédentes, **caractérisé en ce que** le dispositif de préhension (3) présente un dispositif de poussée (23) et un amortisseur d'outil (24).

13. Appareil selon l'une des revendications précédentes, **caractérisé en ce que** les arbres d'appui (22) et l'amortisseur d'outil (23) sont disposés de façon à ce que les surfaces d'appui de l'amortisseur d'outils (23) et des arbres d'appui (22) sont situés sur la même circonférence.
